# EUROPEAN PATENT APPLICATION

(11) **EP 2 209 284 A1**
(43) Date of publication of application: **21.07.2010**
(21) Application number: 09305034.2
(22) Date of filing: 14.01.2009
(51) Int. Cl.: H04L 29/06, H04W 48/08

(54) **A method for the discovery of information necessary for a mobile node to interact with a mobility server**

(71) Applicant: Alcatel Lucent, 75008 Paris (FR)
(72) Inventor: Melia, Telemaco, 91620 Nozay (FR); El Mghazli, Yacine, 91620 Nozay (FR)
(74) Representative: El Manouni, Josiane

(57) **Abstract**

One object of the present invention is a method for the discovery of information necessary for a Mobile Node MN to interact with a mobility server in heterogeneous Radio Access Technology environment, said information being referred to as mobility server information, said method comprising a step of:
- an AAA Server providing mobility server information to a Network Access Server NAS, upon authentication of the MN.

## Description

The present invention generally relates to mobile communication networks and systems.

Detailed descriptions of mobile communication networks and systems can be found in the litterature, in particular in Technical Specifications published by standardisation bodies.

It is simply recalled that in a mobile communication system a Mobile Station MS (or User Equipment UE or Mobile Node MN) has access, via an Access Network, to mobile services provided by a Core Network. There are different types of Access Networks, based on different types of Radio Access Technology (RAT). Examples of RATs include 3GPP based technologies (including 2G GSM/GPRS, 3G UMTS, LTE...etc.), IEEE based technologies (including WLAN, WIMAX ... etc), ...etc.

The present invention more particularly relates to mobility handling in heterogeneous RAT environments, or multi- access systems comprising different types of Access Networks based on different RATs and possibly having overlapping coverage.

In such heterogeneous RAT environments, there is a need for a multi-mode Mobile Station to learn for example about neighbouring cells and/or Access Networks available in the neighborhood, in order to perform network discovery and network selection, in particular for inter-RAT handover procedures.

For optimized inter-RAT handover procedures for example, proposals have been made to provide mobility services to Mobile Stations (including the provision of information such as information necessary for performing network discovery and network selection), using a network server, hereinafter called mobility server, providing such mobility services. A Mobile Station therefore interacts with such mobility server, generally via an IP-based interface.

An example of such mobility services is the ANDSF (Access Network Discovery and Selection Function) service provided in 3GPP network for roaming from 3GPP to non 3GPP (such as WiMAX) Access Network.

To interact with a mobility server such as for example ANDSF, a Mobile Station should dynamically discovery information such as for example ANDSF IP address.

Proposals for such ANDSF IP address discovery mechanisms have been made by IETF, in particular in draft-ietf-mipshop-mos-dhcp-options. However, as recognized by the present invention, such mechanisms are not sufficient for direct application to non 3GPP mobile network architectures such as in particular WiMAX network architecture. Furthermore, nothing is currently provided in non 3GPP networks such as in particular WiMAX network to support mobility services such as ANDSF service.

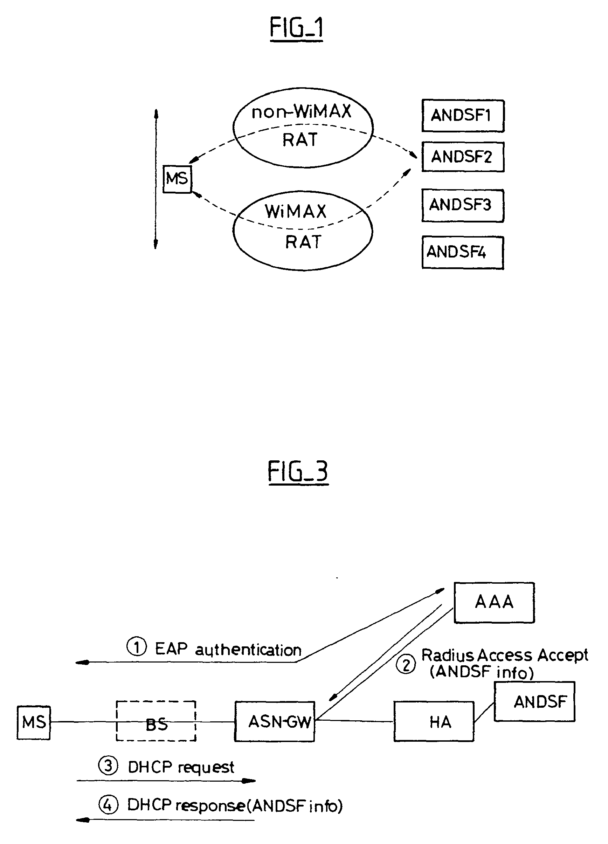

In addition, as recognized by the present invention, such ANDSF IP address discovery mechanisms are not optimized for the most general case of mobility servers deployment scenario, where several ANDSF servers can be deployed either in different operators networks or within the same network, for various reasons such as for example to balance the load of a large amount of users, and/or to take into account that ANDSF service may have different characteristics and purposes such that an operator does not necessarily host all ANDSF services. An example is illustrated in figure 1, where several ANDSF servers such as ANDSF1, ANDSF2, ANDSF3, ANDSF4 are illustrated, for example for the case of handover from WiMAX RAT to non WiMAX RAT.

Therefore there is a need for optimized mechanisms enabling Mobile Stations to dynamically discover and obtain information on an operator's service, in particular WiMAX operator's service such as ANDSF service. More generally there is a need to provide mechanisms for optimized inter-RAT handovers, in particular in non 3GPP networks such as WiMAX networks.

The present invention in particular addresses such needs.

These and other objects are achieved, in one aspect of the present invention, by a method for the discovery of information necessary for a Mobile Node MN to interact with a mobility server in heterogeneous Radio Access Technology environment, said information being referred to as mobility server information, said method comprising a step of:
- an AAA Server providing mobility server information to a Network Accesss Server NAS, upon authentication of the MN.

These and other objects are achieved, in another aspect of the present invention, by entities such as AAA server, Network Access server, DHCP server, DHCP Relay,Mobile Node MN,comprising means for performing such method.

These and other objects are achieved, in another aspect of the present invention, by entities of a non 3GPP network (such as in particular WiMAX network) such as CSN and ASN (such as in particular ASN-GW) entities, comprising means for performing such method.

These and other objects of the present invention will become more apparent from the following description taken in conjunction with the accompanying drawings:
- Figure 1 illustrates an example of ANDSF service deployment, in which the present invention can be used,
- figure 2 recalls the WiMAX network reference model,
- figure 3 illustrates an embodiment of the present invention,
- Figure 4 illustrates another example of ANDSF service deployment, in which the present invention can be used,
- figure 5 illustrates another embodiment of the present invention,
- figure 6 illustrates an example of format of a RADIUS message attribute carrying mobility server information, in an embodiment of the present invention,
- figure 7 illustrates an example of format of a RADIUS message attribute carrying mobility server parameter authenticity, in an embodiment of the present invention.

In the following description of embodiments of the present invention, the term ANDSF service will be used to refer generally to mobility service providing Access Network discovery and selection service (which may for example correspond to the ANDSF service as specified in 3GPP). Furthermore, the example of WiMAX network will more particularly be considered as an example of network to which the present invention applies. It should however be understood that the present invention is not limited to such example.

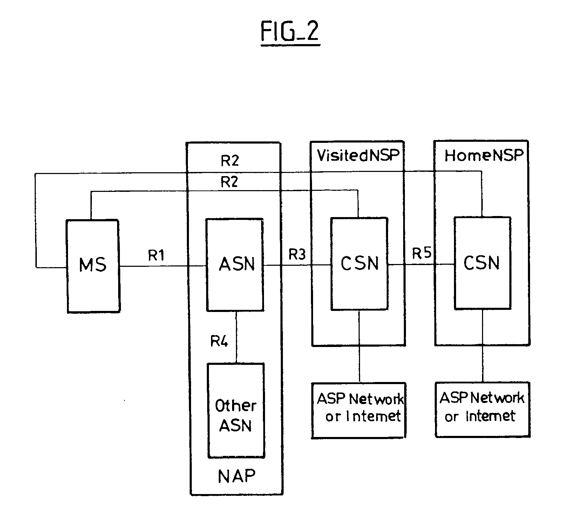

The WiMAX network reference model is first briefly recalled in relation with figure 2 taken from Technical Specification "WiMAX End-to-End Network Systems Architecture" Stage 2 published by WiMAX Forum. A Mobile Station MS has access, via an Access Service Network ASN, to IP services provided by a Connectivity Service Network CSN. ASN is defined as a set of network functions needed to provide radio access to a WiMAX subscriber. ASN includes entities such as Base Station BS and ASN Gateway ASN GW. CSN is defined as a set of network functions enabling IP connectivity and WiMAX services to WiMAX subscribers. CSN includes entities such as AAA Server, DHCP Server and Home Agent HA.

Access authentication performed at network entry in WiMAX network is based on EAP (Extensible Authentication Protocol). EAP runs over PKMv2 protocol between MS and BS, and over RADIUS protocol between Authenticator (or Network Access Server NAS) in ASN and AAA Server in CSN.

IP address assignment performed at network entry in WiMAX network (Proxy Mobile IP PMIP case) is based on DHCP procedures between MS, DHCP relay in ASN, and DHCP server.

In an embodiment, the present invention proposes to add ANDSF-related information in a RADIUS message that results from a successful EAP authentication from the WiMAX CSN AAA. This allows the ASN-GW to acquire the necessary ANDSF information and provide it to the terminal during network entry (using DHCP procedure).

In an embodiment, the present invention proposes that, upon successful authentication, the terminal obtains the ANDSF Service information during WiMAX network entry.

An example of procedure according to an embodiment of the present invention is illustrated in figure 3. The following steps are provided:
1) When the user attaches to the WiMAX network it needs to perform EAP authentication over PKMv2 (MS-BS segment) and over RADIUS (ASNGW-AAA segment).
2) After a successful authentication, the AAA server sends to the ASNGW a RADIUS Access Accept message that contains information related to the profile and session of the authenticated user. This RADIUS message also contains dedicated TLVs designed to transport ANDSF information(such as ANDSF Server IP@ or FQDN, Type of services, ANDSF capabilities).
3) The MS then starts the network entry procedure sending a DHCP request (PMIP case).
4) After some intermediary steps for HoA allocation, the ASNGW responds to the user with a DHCP response embedding the ANDSF information that will be used for this user during this session. The DHCP transport can be as specified in IETF document draft-ietf-mipshop-mos-dhcp-options-06.txt.

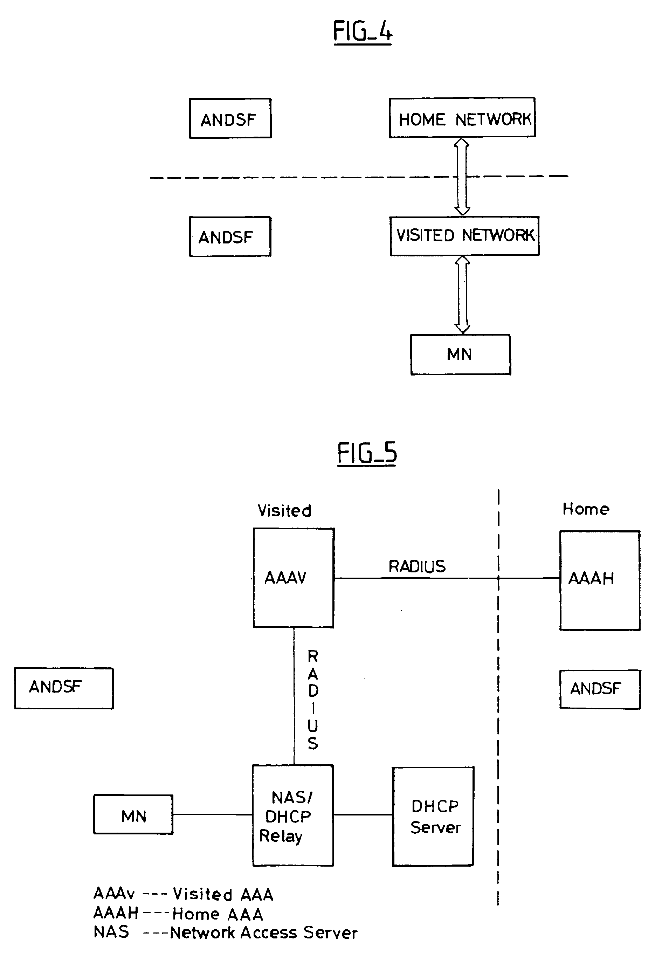

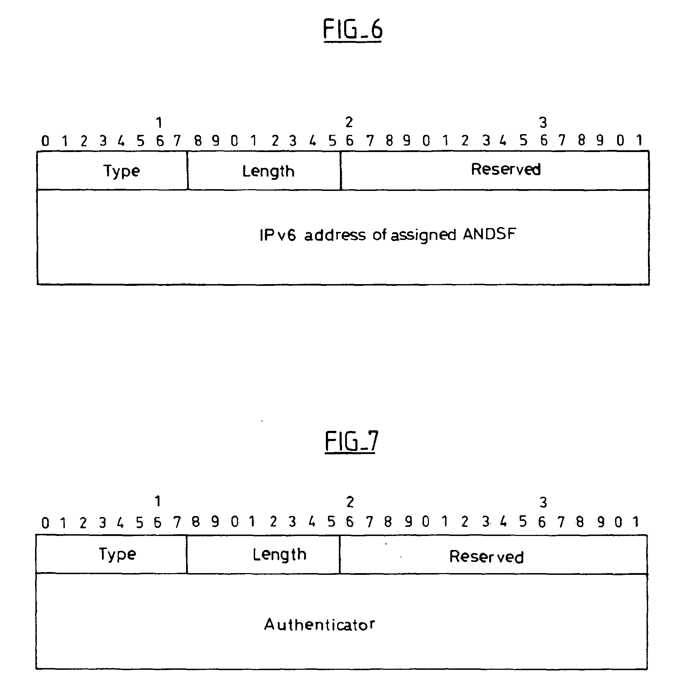

Other aspects and embodiments of the present invention will now be described in the following sections.
1. Introduction:
The 3GPP standardization body, to optimize non-3GPP network discovery procedures, is currently specifying the Access Network Service Discovery Function. This is a function implemented in the Home Network for Release 8, and in both Visited and Home Network for Release 9 of 3GPP specifications. The interface between the mobile device and the ANDSF server is IP based and the MN needs to dynamically discover the IP address or the FQDN of the ANDSF server.
As an example, the described embodiment addresses the case of discovering an ANDSF server either located in the Home or Visited network where the entity authenticating the mobile node and providing the ANDSF service is the same. This is commonly referred to as integrated scenario (opposed to the split scenario where the entity authenticating the MN in the network and the entity providing the service are different).
In an embodiment new attributes to facilitate ANDSF bootstrapping via a RADIUS infrastructure are defined. In an access network where the user attaches to get IPv6 access, there may be a Network Access Server (NAS) or an Access Gateway that will require authentication and authorization. In some cases, this type of access authentication takes place via RADIUS infrastructure. As part of the authentication setup the NAS may receive useful configuration information from the Home RADIUS server of the user. In case of ANDSF the Home RADIUS server may assign various information relevant to the user's device for bootstrapping.
2. Terminology
ANDSF It contains data management and control functionality necessary to provide network discovery and selection assistance data as per operators' policy. The ANDSF is able to initiate data transfer to the mobile node, based on network triggers, and respond to requests from the mobile node. The ANDSF provides inter-system mobility policies and access network discovery information.
AAA Authentication, Authorization and Accounting (AAA) A set of network management services that respectively determine the validity of a user's ID, determine whether a user is allowed to use network resources, and track users' use of network resources.
Home AAA Home AAA server (HAAA) An AAA server located in the MN's home network.
Visited AAA Visited AAA server (VAAA) An AAA server located in the network visited by the MN.
3. Scenarios for ANDSF deployment
Figure 4 illustrates an example of deployment scenario
where ANDSF can be either provided in the Home or in the Visited network.
4. System Components
This section describes the system behavior as shown in Figure 5.
During AAA phase, MN gets authenticated and authorized by the home AAA to get network access. At first MN interacts with the Network Access Server NAS at the visited network, which in turns polls AAA infrastructure to obtain MN access credentials. In this phase, AAA defines which ANDSF the MN can access to (i.e. if the authorized ANDSF are in Visited or Home and which kind of services are provided). After the successfull authentication and network access authorization, the AAA has provided to the NAS the list of ANSDSF (identified either by a FQDN or their IP address) and the list of service they are able to provide. To support the ANDSF assignment, the NAS provides such MoS (Mobility Service) related information to the DHCP Relay colocated with it.
After authentication the node starts DHCP signalling to get the ANDSF address. It sends a DISCOVER or INFORM message or Information_request depending on supported IP version. In order to request the ANDSF information, it inserts in the message ANDSF information options. An example is described in [I-D.bajko-mos-dhcp-options]. The DHCP Relay inserts the ANDSF information ( when it is available via NAS) and forwards it to the DHCP Server.
To complete address configuration the DHCP server replies back to the received request by introducing the collected ANDSF information, which the DHCP server should extract from the Relay agent option whenever available.
5. Radius attributes to carry ANDSF parameters
This section defines format and syntax for the attribute that carries the ANDSF parameters.
5.1. ANDSF attribute
   This attribute is sent by the RADIUS server to the NAS in an Access-Accept message. The attribute carries the assigned ANDSF address. Figure 6 illustrates an example of format of a RADIUS message attribute carrying mobility server information. An example can be as follows for the fields of this attribute format:
   Type:
   ASSIGNED-ANDSF-TYPE to be defined by IANA.
   Length:
   = 20 octets
   Reserved:
   Reserved for future use. All bits set to 0
   IPv6 address of assigned ANDSF:
   128-bit IPv6 address of the assigned ANDSF.
5.2. ANDSF Parameter Authenticity Attribute
   This attribute is sent by the RADIUS server to the NAS in an Access-Accept message. The attribute carries a authenticator to validate the integrity of the ANDSF parameters that are assigned by the RADIUS server. The authenticator is calculated by taking HMAC-SHA-1 of the all the ANDSF related assigned parameter values and a shared secret that the RADIUS server has for the MN. Figure 7 illustrates an example of format of a RADIUS message attribute carrying mobility server parameter authenticity. An example can be as follows for the fields of this attribute format:
   Type:
      ANDSF-PARM-AUTH-TYPE to be defined by IANA.
   Length:
      = 20 octets.
   Reserved:
      Reserved for future use. All bits set to 0.
   Authenticator:
      HMAC-SHA-1 (shared secret between the MN and the RADIUS, assigned ANDSF values).
6. Table of attributes
The following table provides a guide to which attributes may be found in RADIUS message and in what number.

| Request | Accept | Reject | Challenge | # | Attribute |
|---|---|---|---|---|---|
| 0 | 0-1 | 0 | 0 | TBD | ANDSF |
| 0 | 0-1 | 0 | 0 | TBD | ANDSF Parameter Authenticity |

The following table defines the meaning of the above table entries.

| | |
|---|---|
| 0 | This attribute must not be present. |
| 0-1 | Zero or one instance of this attribute may be present. |

7. MN considerations
Upon receiving the ANDSF parameters from the network via mechanisms the MN checks whether the parameter set contains the ANDSF Parameter Authenticity value. If yes, the MN computes a secure hash as following:
HMAC-SNA-1 (shared secret between the MN and the RADIUS, received ANDSF values)
The MN matchs the output of the above hash with the ANDSF Parameter Authenticity value received from the network. If the values match the MN accept the received ANDSF parameters to be from a trusted source. If the comparison results in a mismatch, the MN silently discards the received ANDSF parameters.
If the received ANDSF parameter set does not contain the ANDSF Parameter Authenticity value, the MN may accept the received ANDSF parameters.

In one aspect, in an embodiment, the present invention provides a method for the discovery of information necessary for a Mobile Node MN to interact with a mobility server in heterogeneous Radio Access Technology environment, said information being referred to as mobility server information, said method comprising a step of:
- an AAA Server providing mobility server information to a Network Access Server NAS, upon authentication of the MN.

In an embodiment, said method comprises the steps of:
- said AAA Server defining at least one mobility server authorized for the MN, among a plurality of mobility servers,
- said AAA Server providing mobility server information necessary for MN to interact with said at least one authorized server.

In an embodiment, said plurality of mobility servers includes mobility servers in Home network and in Visited network.

In an embodiment, mobility server information includes at least one of the following information:
- Mobility server IP@ or FQDN,
- Type of mobility services provided ,
- Mobility Server capabilities.

In an embodiment, said method comprises a step of:
- said AAA server providing mobility server information to said NAS using RADIUS procedures.

In an embodiment, said method comprises a step of:
- said AAA server sending mobility server information to said NAS in a RADIUS Accept message, upon successful authentication of the MN.

In an embodiment:
- a RADIUS message contains at least one attribute designed to transport said mobility server information.

In an embodiment:
- a RADIUS message contains at least one attribute designed to transport mobility server information authenticity value.

In an embodiment, said method comprises a step of:
- providing mobility server information to the MN using DHCP procedures.

In an embodiment, said method comprises a step of:
- providing mobility server information to MN in a DHCP Response message.

In an embodiment, said method comprises the steps of:
- NAS providing mobility server information to a DHCP Relay,
- DHCP Relay providing said information to a DHCP Server,
- DHCP Server providing said information to MN.

In an embodiment, said method comprises the steps of:
- upon receiving mobility server information from the network, the MN checks whether the received parameter set contains mobility server parameter authenticity value,
- if yes, the MN computes a secure hash and matches the output of the computation with the parameter authenticity value received from the network,
- if the values match, the MN accepts the received mobility server parameters to be from a trusted source.

In an embodiment, said mobility sever corresponds to Access Network Discovery and Selection Function ANDSF.

In another aspect, in an embodiment, the present invention provides an AAA server, comprising, for the discovery of information necessary for a Mobile Node to interact with a mobility server in heterogeneous Radio Access Technology environment, said information being referred to as mobility server information, :
- means for providing mobility server information to a Network Access Server, upon authentication of the MN.

In another aspect, in an embodiment, the present invention provides a Network Access Server NAS, comprising, for the discovery of information necessary for a Mobile Node MN to interact with a mobility server in heterogeneous Radio Access Technology environment, said information being referred to as mobility server information:
- means for receiving mobility server information from an AAA server.

In an embodiment, said NAS comprises:
- means for providing said information to a DHCP Relay.

In another aspect, in an embodiment, the present invention provides a DHCP Relay, comprising, for the discovery of information necessary for a Mobile Node MN to interact with a mobility server in heterogeneous Radio Access Technology environment, said information being referred to as mobility server information:
- means for receiving mobility server information from a Network Access Server NAS.

In an embodiment, said DHCP Relay comprises:
- means for providing said information to a DHCP Server.

In another aspect, in an embodiment, the present invention provides a DHCP Server, comprising, for the discovery of information necessary for a Mobile Node MN to interact with a mobility server in heterogeneous Radio Access Technology environment, said information being referred to as mobility server information:
- means for receiving mobility server information from a DHCP Relay.

In an embodiment, said DHCP Server comprises:
- means for providing said information to the Mobile Node MN.

In another aspect, in an embodiment, the present invention provides a Mobile Node MN, comprising, for the discovery of information necessary for a Mobile Node MN to interact with a mobility server in heterogeneous Radio Access Technology environment, said information being referred to as mobility server information:
- means for, upon receiving mobility server information from the network, checking whether the received parameter set contains mobility server parameter authenticity value,
- means for, if the received parameter set contains mobility server parameter authenticity value, computing a secure hash and matching the output of the computation with the parameter authenticity value received from the network,
- means for, if the values match, accepting the received mobility server parameters to be from a trusted source.

The detailed implementation of the above-mentioned means does not raise any special problem for a person skilled in the art, and therefore such means do not need to be more fully disclosed than has been made above, by their function, for a person skilled in the art.

## Claims

1. A method for the discovery of information necessary for a Mobile Node MN to interact with a mobility server in heterogeneous Radio Access Technology environment, said information being referred to as mobility server information, said method comprising a step of:
- an AAA Server providing mobility server information to a Network Access Server NAS upon authentication of the MN.

2. A method according to claim 1, comprising the steps of:
- said AAA Server defining at least one mobility server authorized for the MN, among a plurality of mobility servers,
- said AAA Server providing mobility server information necessary for MN to interact with said at least one authorized server.

3. A method according to claim 2, wherein said plurality of mobility servers includes mobility servers in Home network and in Visited network.

4. A method according to any of claims 1 to 3, wherein mobility server information includes at least one of the following information:
- Mobility server IP@ or FQDN,
- Type of mobility services provided ,
- Mobility Server capabilities.

5. A method according to any of claims 1 to 4, comprising a step of:
- said AAA server providing mobility server information to said NAS using RADIUS procedures.

6. A method according to claim 5, comprising a step of:
- said AAA server sending mobility server information to said NAS in a RADIUS Accept message, upon successful authentication of the MN.

7. A method according to claim 5 or 6, wherein:
- a RADIUS message contains at least one attribute designed to transport said mobility server information.

8. A method according to any of claims 5 to 7, wherein:
- a RADIUS message contains at least one attribute designed to transport mobility server information authenticity value.

9. A method according to any of claims 1 to 8, comprising a step of:
- providing mobility server information to the MN using DHCP procedures.

10. A method according to claim 9, comprising a step of:
- providing mobility server information to MN in a DHCP Response message.

11. A method according to any of claims 1 to 11, comprising the steps of:
- NAS providing mobility server information to a DHCP Relay,
- DHCP Relay providing said information to a DHCP Server,
- DHCP Server providing said information to MN.

12. A method according to any of claims 1 to 11, comprising the steps of:
- upon receiving mobility server information from the network, the MN checks whether the received parameter set contains mobility server parameter authenticity value,
- if yes, the MN computes a secure hash and matches the output of the computation with the parameter authenticity value received from the network,
- if the values match, the MN accepts the received mobility server parameters to be from a trusted source.

13. A method according to any of claims 1 to 12, wherein said mobility sever corresponds to Access Network Discovery and Selection Function ANDSF.

14. An AAA Server,comprising, for the discovery of information necessary for a Mobile Node MN to interact with a mobility server in heterogeneous Radio Access Technology environment, said information being referred to as mobility server information:
- means for providing mobility server information to a Network Access Server NAS, upon authentication of the MN.

15. A Network Access Server NAS, comprising, for the discovery of information necessary for a Mobile Node MN to interact with a mobility server in heterogeneous Radio Access Technology environment, said information being referred to as mobility server information:
- means for receiving mobility server information from an AAA Server.

16. A NAS according to claim 15, comprising:
- means for providing said information to a DHCP Relay.

17. A DHCP Relay, comprising, for the discovery of information necessary for a Mobile Node MN to interact with a mobility server in heterogeneous Radio Access Technology environment, said information being referred to as mobility server information:
- means for receiving mobility server information from a Network Access Server NAS.

18. A DHCP Relay according to claim 17, comprising:
- means for providing said information to a DHCP Server.

19. A DHCP Server, comprising, for the discovery of information necessary for a Mobile Node MN to interact with a mobility server in heterogeneous Radio Access Technology environment, said information being referred to as mobility server information:
- means for receiving mobility server information from a DHCP Relay.

20. A DHCP Server according to claim 19, comprising:
- means for providing said information to the Mobile Node MN.

21. A Mobile Node MN, comprising, for the discovery of information necessary for a Mobile Node MN to interact with a mobility server in heterogeneous Radio Access Technology environment, said information being referred to as mobility server information:
- means for, upon receiving mobility server information from the network, checking whether the received parameter set contains mobility server parameter authenticity value,
- means for, if the received parameter set contains mobility server parameter authenticity value, computing a secure hash and matching the output of the computation with the parameter authenticity value received from the network,
- means for, if the values match, accepting the received mobility server parameters to be from a trusted source.
